# EUROPEAN PATENT SPECIFICATION

(11) **EP 1 471 000 B1**
(45) Date of publication and mention of the grant of the patent: **28.10.2009**
(21) Application number: 04009828.7
(22) Date of filing: 26.04.2004
(51) Int. Cl.: B64C 1/00, B64D 41/00

(54) **Aircraft**
Flugzeug
Aéronef

(30) Priority: 24.04.2003 IT TO20030319
(43) Date of publication of application: 27.10.2004
(73) Proprietor: Efanov, Alexander Genadievich, 123502 Moscow (RU); Demchenko, Oleg Fedorovich, 129272 Moscow (RU); Matveev, Andrey Ivanovich, 127562 Moscow (RU); Popovich, Konstantin Fedorovich, 117296 Moscow (RU); Pjaternev, Sergey Vladimirovich, 410047 Saratov (RU); Schkolin, Vladimir Petrovich, 125195 Moscow (RU); Narischkin, Vitaliy Juryevich, 123308 Moscow (RU); Agapov, Sergey Stepanovich, 125445 Moscow (RU); Kodola, Valeriy Grigorievich, 141170 (RU); A.S. Yakovlev Design Bureau, 125315 Moscow (RU)
(72) Inventor: Efanov, Alexander Genadievich, 123502 Moscow (RU); Demchenko, Oleg Fedorovich, 129272 Moscow (RU); Matveev, Andrey Ivanovich, 127562 Moscow (RU); Popovich, Konstantin Fedorovich, 117296 Moscow (RU); Pjaternev, Sergey Vladimirovich, 410047 Saratov (RU); Schkolin, Vladimir Petrovich, 125195 Moscow (RU); Narischkin, Vitaliy Juryevich, 123308 Moscow (RU); Agapov, Sergey Stepanovich, 125445 Moscow (RU); Kodola, Valeriy Grigorievich, 141170 (RU)
(74) Representative: Deambrogi, Edgardo

(56) References cited:
- RU-C1- 2 144 885
- ANONYMOUS: "AEM/YAK-130" INTERNET ARTICLE, [Online] 23 April 2001 (2001-04-23), XP002346972 Retrieved from the Internet: URL:http://web.archive.org/web/20010423023 305/http://www.aermacchi.it/Aircraft/YAK/y ak.htm> [retrieved on 2005-09-28]

## Description

The invention relates to the field of aeronautics.

Aircraft are known in which, in addition to the main power units, auxiliary power units are used (see United States patents No. 4 684 081 of 4.8.1987, No. 5 309 029 of 3.5.1994, No. 5 235 801 of 17.8.1993 and No. 3 472 029 of 12.2.1968). The drawback of the known technical solutions lies in the longitudinal placing of the auxiliary power unit and the impossibility of placing that unit in the rear part of the fuselage in small aircraft. The known embodiments also have a complicated (electrical) system for setting in motion the engines of the main power unit which provides the electrical supply to the systems of the aircraft on land and in flight, and the necessary pressure of the compressed air in such systems.

The prior art closest to the invention is the subject of Russian Federation Patent No. 2144885 of the 27.1.2000. The aircraft comprises a fuselage with cabin for the flight crew in the forward part, braking flap in the upper part and lateral air intakes, an undercarriage, a power unit comprising two turbojets disposed in the fuselage, swept wings with ogival fillet at the junction of the wing with the fuselage, and provided with a mechanism for the inclination of the forward part with stepped discontinuity on the leading edge of the wing, and horizontal and vertical tail assemblies. According to the invention, the fillet at the junction of the wing with the fuselage is formed with a span not less than 0.15 and not more than 0.18 times the span of the wing and with the chord not less than 0.4 and not more than 0.5 times the local chord of the wing, and the stepped discontinuity on the leading edge of the inclinable part of the wing is formed at a distance of 0.55-0.65 times the wing span from the base of the fillet, with the chord not less than 0.075 times the measure of the local chord of the wing without discontinuity. Moreover, the vertical tail assembly is formed with a single tail plane and the horizontal tail assembly is provided with a stepped discontinuity on the leading edge at a distance of 0.25-0.35 times the span of the tab of the horizontal tail assembly.

The turbines are placed in the middle part of the fuselage so that their nozzles are in front of the horizontal tail assembly and the chord of the stepped discontinuity of the leading edge of the horizontal tail assembly is not less than 0.2 times the measure of the local chord, including the discontinuity.

The wing is provided with winglets, the measure of which is not less than 0.03 times the surface area of the base trapezium of the wing. The winglets are fixed on the wing at an angle of not more than 20 degrees with respect to the vertical plane and the chords of their bases are turned outwards by 2-5 degrees with respect to the tip chords of the wing, and the aerodynamic rotation is also 2-5 degrees.

The drawback of this aircraft lies in the fact that, while having perfect aerodynamic qualities, it does not have sufficiently extensive functionality since rapid starting of the main power unit cannot be carried out and the aircraft has a high power consumption.

The aim of the present invention is to increase the functionality of the aircraft, its safety and economy, while maintaining high aerodynamic qualities.

This result is obtained by an aircraft comprising a fuselage with cabin for the flight crew in the forward part, braking flap in the upper part and lateral air intakes, an undercarriage, a power unit comprising two turbojets disposed in the fuselage, swept wings with ogival fillet at the junction with the fuselage and provided with a mechanism for the inclination of the forward part with stepped discontinuity on the leading edge of the wing, and horizontal and vertical tail assemblies, characterised in that the fillet at the junction of the wing with the fuselage is formed with a span not less than 0.15 and not more than 0.18 times the span of the wing from the base of the fillet and with the chord not less than 0.4 and not more than 0.5 times the local chord of the wing, the stepped discontinuity on the leading edge of the inclinable part of the wing is formed at a distance of 0.55-0.65 times the wing span from the base of the fillet and with the chord not less than 0.075 times the measure of the local chord of the wing without discontinuity, and the vertical tail assembly is formed with a single tail plane; in that the horizontal tail assembly is provided with a stepped discontinuity on the leading edge at a distance of 0.25-0.35 times the span of the tab of the horizontal tail assembly; and in that said aircraft is provided with an auxiliary power unit placed in the rearward part of the fuselage,

the auxiliary power unit being placed in a transverse direction with respect to the longitudinal axis of the fuselage, with lateral discharge of the gases.

The engine of the auxiliary power unit, or the whole unit, may be placed within corresponding frames of the fuselage.

For starting the engines of the power units, an air starting system may be used which comprises ducts for drawing in air and feeding of the air starters.

The air ducts for drawing in air may be incorporated in the air conditioning system.

The auxiliary power unit includes a gas turbine and a transmission reduction gear for the auxiliary equipment.

On the aircraft an air intake may be used having a duct bounded by an upper member of the aircraft and having a valve which can close the duct and the inlet on the upper member.

The valve is mounted on the upper member and may be pivoted in such a manner as to be disposed flush with the surface of the upper member.

The actuating mechanism for the valve is placed in the valve itself. At least one additional feed valve may also be placed to the rear of the inlet on the fuselage. By upper member, the wing and/or the fuselage is meant.

The functionalities of the aircraft may be increased owing to the interchangeable sections which can be installed in the forward part of the fuselage.

The sections are produced with frames for withstanding the load of the respective items of equipment which may be installed within them. The sections are limited by the third frame. The forward part of the fuselage is produced so as to be able to be joined, by means of its frame, with the frames of the interchangeable sections.

A deflector is fixed on the movable aileron of the wing.

The aircraft has nine points of attachment of the payload, respectively six points beneath the wings, two points beneath the wing supports and one point beneath the fuselage.

The characteristics and advantages of the invention will be explained in more detail in the following description, provided by way of non-limiting example, with reference to the appended drawings, in which:

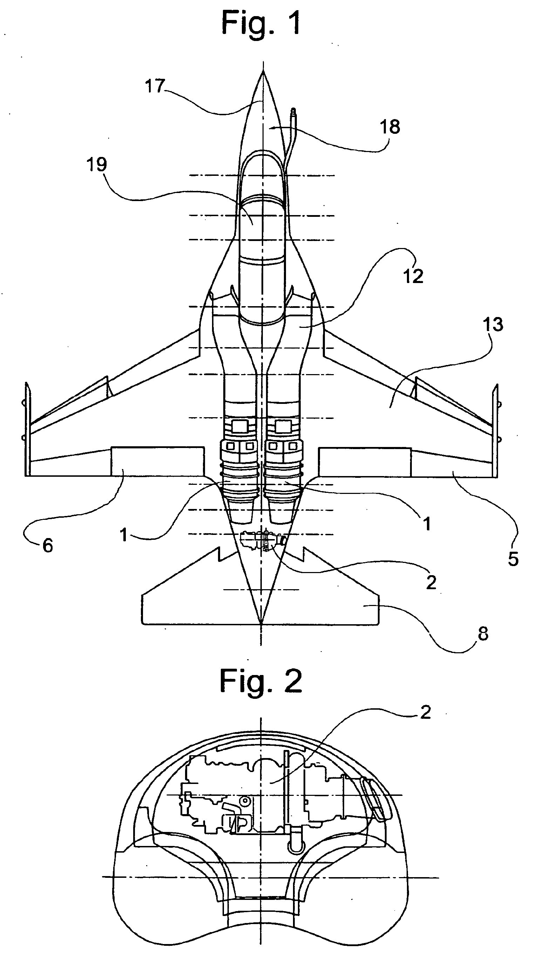

Figure 1 is a general diagrammatic view of the aircraft;
Figure 2 shows the placing of the auxiliary power unit;

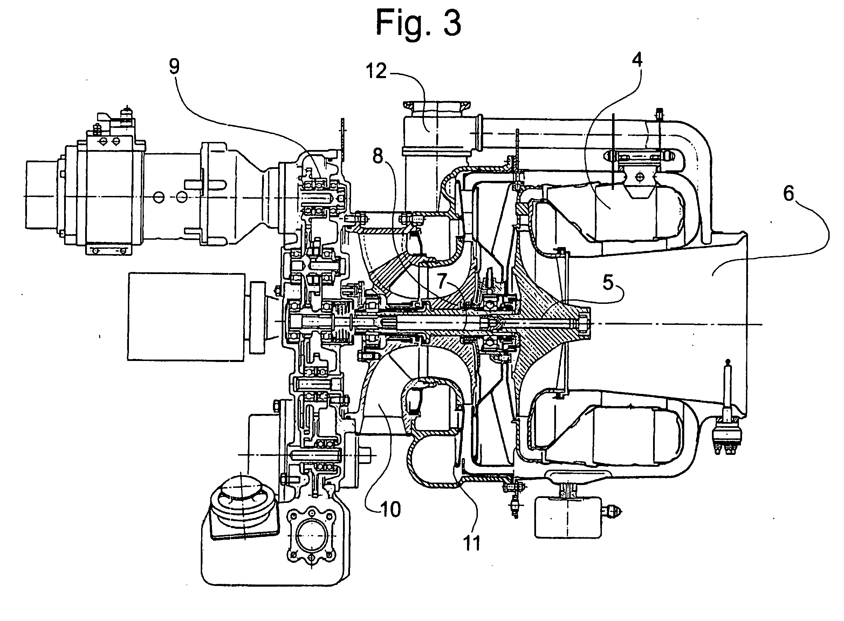

Figure 3 is a general view of the auxiliary power unit;

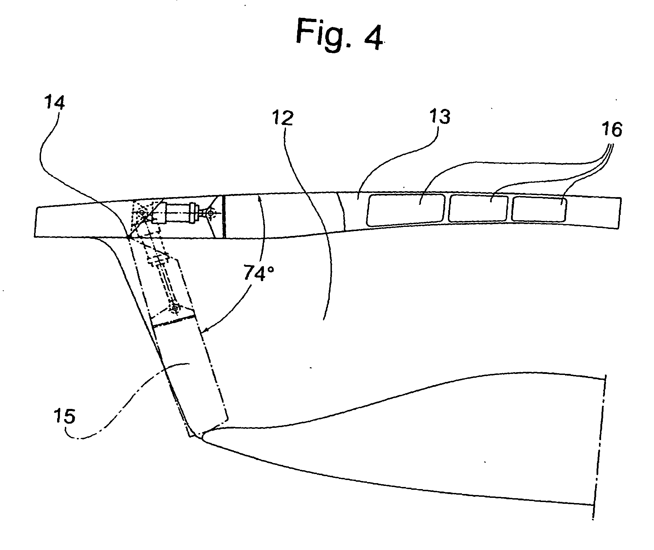

Figure 4 is a diagram of the air intake;

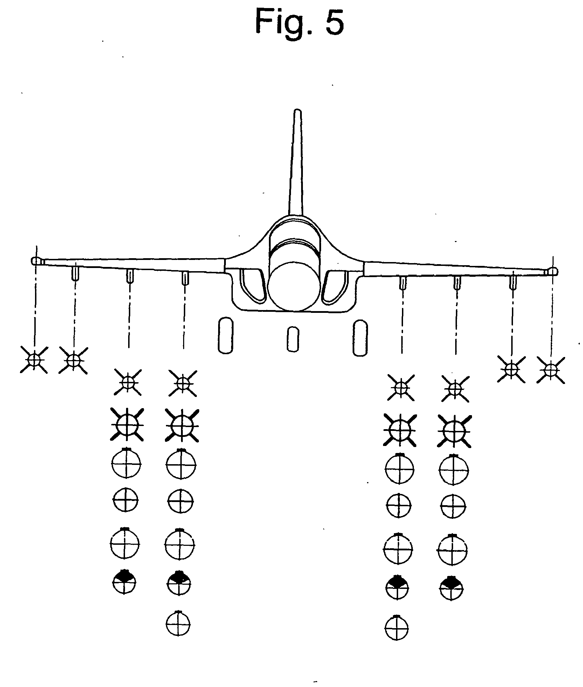

Figure 5 is a diagram of attachment of the payload;

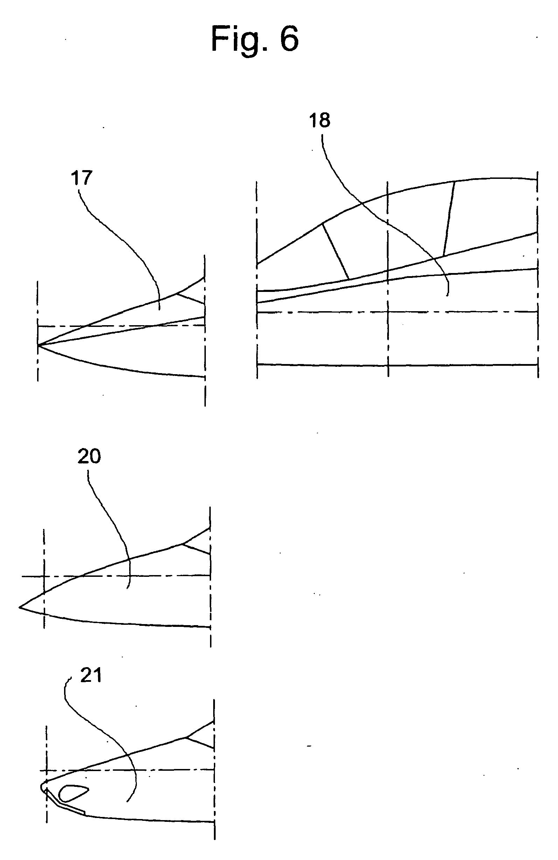

Figure 6 is a diagrammatic drawing which shows the interchangeable forward sections;

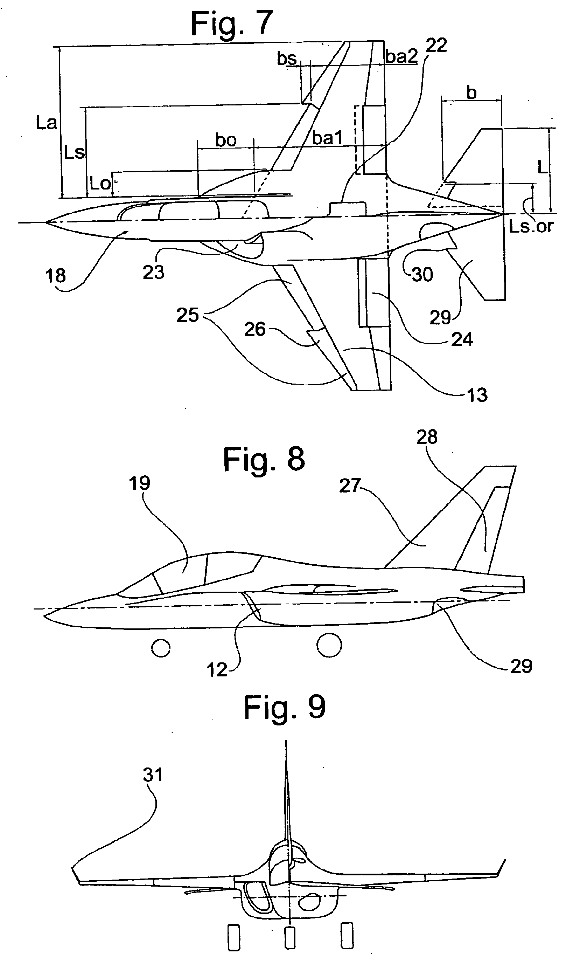

Figure 7 is a combined diagrammatic representation of the aircraft according to the invention, comprising a view from above and a view from below;
Figure 8 is a lateral view of the aircraft of Figure 7; and
Figure 9 is a combined diagrammatic representation of the aircraft according to the invention, comprising a front view and a rear view.

The aircraft has a main power unit 1 and an auxiliary power unit 2 placed in the rearward part of the fuselage 3, transversely with respect to the longitudinal axis.

The auxiliary power unit comprises a gas turbine 4 including a turbine 5 and an exhaust nozzle 6. On the shaft 7 of the turbine 5 a rotor 9 of a centrifugal compressor is mounted. The shaft 7 is connected to a reduction gear 8 for transmission to auxiliary equipment.

The turbine 5 and the rotor 9 form the turbo-compressor. The body of the compressor forms a circumferential radial flow inlet duct 10, and the outer and inner cases of the body, together with the radial diffuser, form a scroll-like, slidably extensible receiver 11.

On the outer case of the body, surfaces are arranged for fixing the ducts for drawing in air, the fuel injectors and the oil system ducts.

The air intake of the engine of the aircraft has a duct 12 bounded at the top by the wing 13. In the duct 12, on the wing 13 is installed the valve 15 hinged on the axis 14. The valve is pivotable. Also present on the wing 13 are auxiliary valves 16 for feeding the engine.

Provision is made to enable several interchangeable sections (nose pieces) 17, 20, 21, of the forward part 18 of the fuselage with the crew cabin 19, to be used on the aircraft.

The aircraft is produced according to the conventional plan of a monoplane with swept midwing, two-seater cabin with the seats in tandem for the pilots, and is provided with two turbojets.

The canopy of the cabin provides visibility during all flight modes and during taxying, as well as protection for the pilots from external agents. The canopy of the cabin consists of a windscreen without reinforcements and of a common door for both the pilots which opens to the right and is mounted on three hinges.

The windscreen of the cabin is formed of three-layer silicate glass, with electric heating for preventing the formation of ice. The windscreen protects the pilots against bird-strike. The wing of the aircraft consists of two removable supports which are joined to the fuselage.

Fixed to the end portion of the supports are beams for the attachment of special loads. In addition, each support is provided with three removable pylons for special loads. The attachment of the fuel tanks is provided on the pillar disposed along the junction of the wing with the fuselage.

The aircraft has a braking flap 22 installed on the fuselage. The swept wing is formed with a forward fillet 23 and has mechanisms such as ailerons 24 and inclinable portions of the forward part of the wings 25 with stepped discontinuity 26 of the leading profile. The aircraft comprises a vertical tail assembly with a single plane 27 with turn rudder 28, and a horizontal tail assembly 29 with stepped discontinuity 30 on the forward edge. The engines are placed in the middle part of the fuselage so that their nozzles are in front of the horizontal tail assembly 29. The wing 13 is provided with winglets 31.

The profile of the fillet 23 is formed with a span "Lo" not less than 0.15 and not more than 0.18 times the span "La" of the wing 13 from the base of the fillet 23, and with the chord "bo" not less than 0.4 and not more than 0.5 times the measurement of the local chord "ba1" of the base trapezium of the wing 13 without the stepped discontinuity 26 and its forward edge.

The stepped discontinuity 26 is formed at a distance "Ls" ranging between 0.55 and 0.65 times the span of the wing 13 from the base of the discontinuity 23, and with the chord "bs" not less than 0.075 times the measure of the local chord "ba2" of the base trapezium of the wing 13 without the discontinuity 26 and its forward edge. The discontinuity 30 of the horizontal tail assembly 29 is formed at the distance "Ls.or" ranging between 0.25 and 0.35 times the span of the horizontal tail assembly 29, and the measure of the chord is not less than 0.2 times the measure of the local chord "b" of the horizontal tail assembly 29, including discontinuity 30.

The winglets 31 constitute not less than 0.03 per cent of the surface area of the base trapezium of the wing. The winglets are fixed to the wing at an angle of not more than 20 degrees with respect to the vertical plane, and the chords of their bases are turned outwards by 2-5 degrees with respect to the tip chords of the wing and the aerodynamic rotation is also 2-5 degrees.

The inlet for each engine comprises a subsonic air intake with curved forward edge. The air intakes are located on the lateral surface of the fuselage, below the fillet at the junction of the wing with the fuselage, thereby ensuring stable operation of the engines in all flight modes, even at large angles of incidence.

The functioning of the aircraft is as follows.

Before the flight, the engine 4 of the auxiliary power unit is started. With the auxiliary power unit in operation, all the systems of the aircraft are checked, by means of the power provided thereby.

During the check, or immediately afterwards, the engines of the main power unit are started. For starting the engines of the main power unit, compressed air comes from the receiver through the outlet 22 to the starters of the main power unit.

The use of air for starting the engines reduces the power consumption in the operation of the aircraft.

In case of need, the auxiliary power unit may also be started in flight in order to provide electric power and compressed air for the systems of the aircraft in case of damage.

The construction of the air intake ensures the downflow of the boundary layer from the surface of the fuselage.

In the upper part of the air intake are the auxiliary feed valves 16. At the same time, these valves make it possible to avoid sudden changes in the air pressure. In order to prevent the entry of foreign bodies into the engine, the air intakes are provided with safety doors.

If the engines are operating on the ground, during taxying, take-off and landing, the doors close the air intakes and open the air access through fenestrations provided on the fillet.

The aerodynamic plan, the parameters of the power unit and of the systems of the aircraft make it possible to carry out flights substantially in all appropriate flight modes of current and future military aircraft.

The fillets formed in front of the wing and the structure of the air intakes provide the possibility of carrying out stable and controlled flights at angles of incidence of up to 40 degrees.

The presence of a high tensile force provides the aircraft with the possibility of withstanding heavy overloads during in-flight manoeuvres, high performances during take-off, and rapid altitude gain.

The nine points of attachment of the payload (six points beneath wings, two points beneath the wing supports and one point beneath the fuselage) allow the aircraft to carry a load of 3000 kilos (armaments, extra fuel tanks, containers with weapons aiming systems, recognition equipment, radio-electronic and infra-red means of defence).

The air intakes protected by the doors 15 during movement on the ground, an undercarriage suitable for earth airstrips and the nose wheel with mud-guard, as well as the high performances on take-off and landing make it possible to use the aircraft even on small and non-equipped airfields.

The fuselage with the interchangeable forward sections (at the third frame) make it possible to mount a small radar station or laser and optical recognition system on board.

The auxiliary power unit makes it possible to start the main engines autonomously away from the base airfield. The aircraft is equipped with a complete remote electrical control system. This system has the function of automatic and active control of flight safety. The system also makes it possible to change, for training purposes, the characteristics of flight stability and manoeuvrability of the aircraft, according to the type of flight to be simulated.

The whole of the on-board equipment of the aircraft provides:
- automatic definition of the navigation and piloting parameters, necessary for controlling the aircraft during all phases of flight, both in automatic and manual mode, including low altitude flights and the performance of high aerobatic evolutions at all hours of the day and night, in easy and difficult meteorological conditions (for example, landing with the second category meteorological minimum);
- the measurement, computation and demonstration to the pilots of the military mode flight parameters, and weapons handling;
- automatic checking of the state of the equipment and systems of the aircraft during all phases of technical maintenance, in detail as far as the interchangeable units;
- the use of military flight modes and the simulation thereof.

The simplicity of construction, the safety of the structure of the aircraft, of the power unit and of all the systems of the aircraft, the great resources and complete autonomy of the aircraft, as well as the high technology of operation, the low cost of the life cycle and the high technical and flight performances make it possible to carry out all the most advanced operations, as well as the training of pilots in a short time.

## Claims

1. An aircraft, comprising a fuselage with cabin for the flight crew in the forward part, braking flap in the upper part and lateral air intakes, an undercarriage, a power unit comprising two turbojet engines, swept wings (13) with ogival fillet at the junction of the wing with the fuselage, and provided with a mechanism for the inclination of the forward part of the wings with stepped discontinuity on the leading edge of the wing, horizontal and vertical tail assemblies, in which the fillet at the junction of the wing with the fuselage is formed with a span not less than 0.15 and not more than 0.18 times the span of the wing, and with the chord not less than 0.4 and not more than 0.5 times the local chord of the wing, the stepped discontinuity on the leading edge of the inclinable part of the wing is formed at a distance ranging between 0.55 and 0.65 times the wing span from the base of the fillet, with the chord not less than 0.075 times the measure of the local chord of the wing without the discontinuity, the vertical tail assembly is formed with a single plane and the horizontal tail assembly is provided with a stepped discontinuity on the forward edge at a distance ranging between 0.25 and 0.35 times the span of the tab of the horizontal tail assembly, **characterised in that** it is provided with an auxiliary power unit (2) placed in the rearward part (3) of the fuselage, the auxiliary power unit being placed transversely with respect to the longitudinal axis of the fuselage.

2. An aircraft according to claim 1, **characterised in that** the engines of the power unit are placed in the middle part of the fuselage with the possibility of placing their nozzles in front of the horizontal tail assembly, and the chord of the stepped discontinuity of the leading edge of the horizontal tail assembly is not less than 0.2 times the measure of the local chord, including the discontinuity.

3. An aircraft according to claim 1 or 2, **characterised in that** the wing is provided with winglets, the area of which is not less than 0.03 times the surface area of the base trapezium of the wing, said winglets being fixed on the wing at an angle of not more than 20 degrees with respect to the vertical plane, the chords of their bases being turned towards the outside by 2-5 degrees with respect to the tip chords of the wing and the aerodynamic rotation also being 2-5 degrees.

4. An aircraft according to any one of claims 1 to 3, **characterised in that** the gases of the auxiliary power unit (2) are discharged through the lateral part of the fuselage.

5. An aircraft according to any one of claims 1 to 4, **characterised in that** the engine of the auxiliary power unit (2) is placed within the frames of the fuselage.

6. An aircraft according to any one of claims 1 to 5, **characterised in that** it is provided with a system for starting the engines of the main power unit by means of compressed air, the system comprising tubes for drawing in air and tubes for feeding the starters of the engines with compressed air.

7. An aircraft according to claim 6, **characterised in that** said tubes for drawing in air are incorporated in the air conditioning system.

8. An aircraft according to any one of claims 1 to 7, **characterised in that** the auxiliary power unit (2) comprises a gas turbine (4) and a reduction gear (8).

9. An aircraft according to any one of claims 1 to 8, **characterised in that** the fuselage is provided with different forward sections.

10. An aircraft according to any one of claims 1 to 9, **characterised in that** it is provided with rotatable doors (15), mounted on corresponding parts of the wing and intended to close the inlets in an axial direction of the air intakes and the additional inlets provided in the wing and/or in the fuselage.

11. An aircraft according to claim 10, **characterised in that** the doors (15) may be positioned flush with the upper surface of the wing (15).

12. An aircraft according to claim 10 or 11, **characterised in that** the actuating mechanism of each door is disposed within the door itself.

13. An aircraft according to any one of claims 1 to 12, **characterised in that** at least one additional feed valve (16) is mounted on the fuselage and/or behind each inlet.

14. An aircraft according to any one of claims 1 to 13, **characterised in that** the interchangeable forward sections are produced with frames for supporting the loads of the corresponding equipment placed in those sections.

15. An aircraft according to claim 14, **characterised in that** the forward sections are limited by the third frame.

16. An aircraft according to claim 14 or 15, **characterised in that** the forward part of the fuselage is produced so as to be able to be joined by means of its third frame with the frames of the interchangeable forward sections.

17. An aircraft according to any one of claims 1 to 16, **characterised in that** a fixed deflector is mounted on the movable aileron of the wing.

18. An aircraft according to any one of claims 1 to 17, **characterised in that** it is provided with nine points of attachment of the payload, respectively six points beneath the wings, two points beneath the wing supports and one point beneath the fuselage.

## Patentansprüche

1. Luftfahrzeug, umfassend einen Rumpf mit Kabine für das Flugpersonal im vorderen Teil, eine Bremsklappe im oberen Teil und seitliche Lufteinlässe, ein Fahrgestell, ein Triebwerk, umfassend zwei Turboluftstrahltriebwerke, Pfeilflügel (13) mit spitzbogenförmigem Verkleidungsübergang an der Verbindung der Tragfläche mit dem Rumpf, welche an der Vorderkante der Tragfläche mit einem Mechanismus zum Neigen des vorderen Teils der Tragflächen mit gestufter Diskontinuität ausgestattet sind, horizontale und vertikale Leitwerke, in denen der Verkleidungsübergang an der Verbindung der Tragfläche mit dem Rumpf mit einer Spannweite von nicht weniger als 0,15 und nicht mehr als 0,18 mal der Spannweite der Tragfläche gebildet ist und wobei die Flügeltiefe nicht weniger als 0,4 und nicht mehr als 0,5 mal der lokalen Flügeltiefe der Tragfläche entspricht, die gestufte Diskontinuität an der Vorderkante des neigbaren Teils der Tragfläche in einem Abstand, der zwischen 0.55 und 0,65 mal der Flügelspannweite entspricht, von der Basis des Verkleidungsübergangs gebildet ist, wobei die Flügeltiefe nicht weniger als 0,075 mal dem Ausmaß der lokalen Flügeltiefe der Tragfläche ohne Diskontinuität entspricht, das vertikale Leitwerk mit einer Einzeltragfläche gebildet ist und das horizontale Leitwerk mit einer gestuften Diskontinuität an der vorderen Kante versehen ist, und zwar in einem Abstand, der zwischen 0,25 und 0,35 mal der Spannweite des Hilfsruders des horizontalen Leitwerks entspricht, **dadurch gekennzeichnet, dass** es mit einem im hinteren Teil (3) des Rumpfes platzierten Hilfstriebwerk (2) ausgestattet ist, wobei das Hilfstriebwerk quer in Bezug auf die Längsachse des Rumpfes platziert ist.

2. Luftfahrzeug gemäß Anspruch 1, **dadurch gekennzeichnet, dass** die Motoren des Triebwerks im mittleren Teil des Rumpfes platziert sind, mit der Möglichkeit der Anordnung ihrer Düsen vor dem horizontalen Leitwerk, und die Flügeltiefe der gestuften Diskontinuität der Vorderkante des horizontalen Leitwerks nicht weniger als 0,2 mal dem Ausmaß der lokalen Flügeltiefe, einschließlich der Diskontinuität, entspricht.

3. Luftfahrzeug gemäß Anspruch 1 oder 2, **dadurch gekennzeichnet, dass** die Tragfläche mit Winglets versehen ist, deren Fläche nicht weniger als 0,03 mal der Oberfläche des Grundtrapezes der Tragfläche entspricht, wobei die Winglets in einem Winkel von nicht mehr als 20 Grad in Bezug auf die vertikale Ebene an der Tragfläche befestigt sind, die Flügeltiefen ihrer Basen in Bezug auf die Flügelspitzentiefen der Tragfläche 2-5 Grad nach außen gedreht sind und die aerodynamische Drehung ebenfalls 2-5 Grad beträgt.

4. Luftfahrzeug gemäß einem der Ansprüche 1 bis 3, **dadurch gekennzeichnet, dass** die Gase des Hilfstriebwerks (2) durch den seitlichen Teil des Rumpfes abgelassen werden.

5. Luftfahrzeug gemäß einem der Ansprüche 1 bis 4, **dadurch gekennzeichnet, dass** der Motor des Hilfstriebwerks (2) innerhalb der Spanten des Rumpfes platziert ist.

6. Luftfahrzeug gemäß einem der Ansprüche 1 bis 5, **dadurch gekennzeichnet, dass** es mit einem System zum Starten der Motoren des Haupttriebwerks mittels Druckluft ausgestattet ist, wobei das System Rohre zum Ansaugen von Luft und Rohre zum Versorgen der Anlasser der Motoren mit Druckluft umfasst.

7. Luftfahrzeug gemäß Anspruch 6, **dadurch gekennzeichnet, dass** die Rohre zum Ansaugen von Luft im Klimatisierungssystem inkorporiert sind.

8. Luftfahrzeug gemäß einem der Ansprüche 1 bis 7, **dadurch gekennzeichnet, dass** das Hilfstriebwerk (2) eine Gasturbine (4) und ein Untersetzungsgetriebe (8) umfasst.

9. Luftfahrzeug gemäß einem der Ansprüche 1 bis 8, **dadurch gekennzeichnet, dass** der Rumpf mit verschiedenen vorderen Abschnitten versehen ist.

10. Luftfahrzeug gemäß einem der Ansprüche 1 bis 9, **dadurch gekennzeichnet, dass** es mit schwenkbaren Türen (15) ausgestattet ist, die an entsprechenden Teilen der Tragfläche angebracht sind und dazu gedacht sind, die Einlassöffnungen in axialer Richtung der Lufteinlässe und die zusätzlichen Einlassöffnungen, die in der Tragfläche und/oder im Rumpf vorgesehen sind, zu verschließen.

11. Luftfahrzeug gemäß Anspruch 10, **dadurch gekennzeichnet, dass** die Türen (15) auf gleicher Ebene mit der Oberseite der Tragfläche (13) positioniert sein können.

12. Luftfahrzeug gemäß Anspruch 10 oder 11, **dadurch gekennzeichnet, dass** der Betätigungsmechanismus jeder Tür innerhalb der Tür selbst angeordnet ist.

13. Luftfahrzeug gemäß einem der Ansprüche 1 bis 12, **dadurch gekennzeichnet, dass** mindestens ein zusätzliches Speiseventil (16) am Rumpf und/oder hinter jeder Einlassöffnung angebracht ist.

14. Luftfahrzeug gemäß einem der Ansprüche 1 bis 13, **dadurch gekennzeichnet, dass** die austauschbaren vorderen Abschnitte mit Spanten zum Tragen der Lasten der entsprechenden, in diesen Abschnitten platzierten Ausrüstungsgegenstände hergestellt sind.

15. Luftfahrzeug gemäß Anspruch 14, **dadurch gekennzeichnet, dass** die vorderen Abschnitte durch den dritten Spant begrenzt sind.

16. Luftfahrzeug gemäß Anspruch 14 oder 15, **dadurch gekennzeichnet, dass** der vordere Teil des Rumpfes so hergestellt ist, um mittels seines dritten Spants mit den Spanten der austauschbaren vorderen Abschnitte verbunden werden zu können.

17. Luftfahrzeug gemäß einem der Ansprüche 1 bis 16, **dadurch gekennzeichnet, dass** ein fixierter Deflektor am beweglichen Querruder der Tragfläche angebracht ist.

18. Luftfahrzeug gemäß einem der Ansprüche 1 bis 17, **dadurch gekennzeichnet, dass** es mit neun Befestigungspunkten für die Fracht, nämlich sechs Punkten unterhalb der Tragflächen, zwei Punkten unterhalb der Tragflächenabstützungen und einem Punkt unterhalb des Rumpfes, versehen ist.

## Revendications

1. Aéronef, comprenant un fuselage avec une cabine pour l'équipage dans la partie avant, un volet de freinage dans la partie supérieure et des entrées d'air latérales, et un train d'atterrissage, un groupe moteur comprenant deux turboréacteurs, des ailes en flèche (13) avec un congé de raccordement ogival à la jonction de l'aile avec le fuselage, et pourvu d'un mécanisme pour l'inclinaison de la partie avant des ailes avec une discontinuité étagée sur le bord d'attaque de l'aile, des empennages horizontal et vertical, dans lequel le congé de raccordement à la jonction de l'aile avec le fuselage est formé avec une longueur qui n'est pas inférieure à 0,15 fois et pas supérieure à 0,18 fois la longueur de l'aile, et avec la corde qui n'est pas inférieure à 0,4 fois et pas supérieure à 0,5 fois la corde locale de l'aile, la discontinuité étagée sur le bord d'attaque de la partie inclinable de l'aile est formée à une distance comprise entre 0,55 et 0,65 fois la longueur de l'aile depuis la base du congé de raccordement, la corde n'étant pas inférieure à 0,075 fois la mesure de la corde locale de l'aile sans la discontinuité, l'empennage vertical est formé avec un seul plan et l'empennage horizontal est pourvu d'une discontinuité étagée sur le bord avant à une distance comprise entre 0,25 et 0,35 fois la longueur du volet compensateur de l'empennage horizontal, **caractérisé en ce qu'**il est pourvu d'un groupe moteur auxiliaire (2) placé dans la partie arrière (3) du fuselage, le groupe moteur auxiliaire étant placé transversalement par rapport à l'axe longitudinal du fuselage.

2. Aéronef selon la revendication 1, **caractérisé en ce que** les moteurs du groupe moteur sont placés dans la partie médiane du fuselage avec la possibilité de placer leurs buses d'éjection en face de l'empennage horizontal, et la corde de la discontinuité étagée du bord d'attaque de l'empennage horizontal n'est pas inférieure à 0,2 fois la mesure de la corde locale, y compris la discontinuité.

3. Aéronef selon la revendication 1 ou 2, **caractérisé en ce que** l'aile est pourvue de winglets, dont la surface n'est pas inférieure à 0,03 fois l'aire du trapèze de base de l'aile, lesdites winglets étant fixées sur l'aile à un angle de pas plus de 20 degrés par rapport au plan vertical, les cordes de leurs bases étant tournée vers l'extérieur de 2-5 degrés par rapport aux cordes d'extrémité de l'aile et la rotation aérodynamique étant aussi de 2-5 degrés.

4. Aéronef selon l'une quelconque des revendications 1 à 3, **caractérisé en ce que** les gaz du groupe moteur auxiliaire (2) sont évacués par la partie latérale du fuselage.

5. Aéronef selon l'une quelconque des revendications 1 à 4, **caractérisé en ce que** le moteur du groupe moteur auxiliaire (2) est placé dans les cadres du fuselage.

6. Aéronef selon l'une quelconque des revendications 1 à 5, **caractérisé en ce qu'**il est pourvu d'un système pour démarrer les moteurs du groupe moteur principal au moyen de l'air comprimé, le système comprenant des tubes d'admission d'air et des tubes pour alimenter les starters des moteurs avec de l'air comprimé.

7. Aéronef selon la revendication 6, **caractérisé en ce que** lesdits tubes d'admission d'air sont incorporés dans le système de conditionnement d'air.

8. Aéronef selon l'une quelconque des revendications 1 à 7, **caractérisé en ce que** le groupe moteur auxiliaire (2) comprend une turbine à gaz (4) et un engrenage réducteur (8).

9. Aéronef selon l'une quelconque des revendications 1 à 8, **caractérisé en ce que** le fuselage est pourvu de différentes sections avant.

10. Aéronef selon l'une quelconque des revendications 1 à 9, **caractérisé en ce qu'**il est pourvu de portes pivotantes (15), montées sur des parties correspondantes de l'aile et prévues pour fermer les entrées dans la direction axiale des entrées d'air et les orifices d'entrée supplémentaires placés dans l'aile et/ou dans le fuselage.

11. Aéronef selon la revendication 10, **caractérisé en ce que** les portes (15) peuvent être positionnées à niveau avec la surface supérieure de l'aile (13).

12. Aéronef selon la revendication 10 ou 11, **caractérisé en ce que** le mécanisme d'actionnement de chaque porte est disposé dans la porte elle-même.

13. Aéronef selon l'une quelconque des revendications 1 à 12, **caractérisé en ce qu'**au moins une soupape d'alimentation supplémentaire (16) est montée sur le fuselage et/ou derrière chaque orifice d'entrée.

14. Aéronef selon l'une quelconque des revendications 1 à 13, **caractérisé en ce que** les sections avant interchangeables sont fabriquées avec des cadres pour supporter les charges de l'équipement correspondant placé dans ces sections.

15. Aéronef selon la revendication 14, **caractérisé en ce que** les sections avant sont limitées par le troisième cadre.

16. Aéronef selon la revendication 14 ou 15, **caractérisé en ce que** la partie avant du fuselage est fabriquée de façon à pouvoir être jointe au moyen de son troisième cadre avec les cadres des sections avant interchangeables.

17. Aéronef selon l'une quelconque des revendications 1 à 16, **caractérisé en ce qu'**un déflecteur fixe est monté sur l'aileron mobile de l'aile.

18. Aéronef selon l'une quelconque des revendications 1 à 17, **caractérisé en ce qu'**il est pourvu de neuf points de fixation de la charge utile, respectivement six points sous les ailes, deux points sous les supports d'aile et un point sous le fuselage.
